(19)

Europäisches
Patentamt
European
Patent Office
Office européen
des brevets

(11) **EP 2 623 186 A1**

(12) **EUROPEAN PATENT APPLICATION**
published in accordance with Art. 153(4) EPC

(43) Date of publication:
07.08.2013 Bulletin 2013/32

(51) Int Cl.:
*B01D 65/06* (2006.01)     *B01D 65/02* (2006.01)
*B01D 71/26* (2006.01)     *B01D 71/32* (2006.01)
*C02F 1/44* (2006.01)

(21) Application number: 11828987.5

(22) Date of filing: 26.09.2011

(86) International application number:
PCT/JP2011/071798

(87) International publication number:
WO 2012/043433 (05.04.2012 Gazette 2012/14)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 28.02.2011   JP 2011041551
27.09.2010   JP 2010215147

(71) Applicant: **Sumitomo Electric Industries, Ltd.**
**Chuo-ku**
**Osaka-shi**
**Osaka 541-0041 (JP)**

(72) Inventors:
• **HAHAKURA, Shuji**
**Osaka-shi**
**Osaka 554-0024 (JP)**

• **KASHIHARA, Hideki**
**Osaka-shi**
**Osaka 554-0024 (JP)**
• **YAHAGI, Satoshi**
**Osaka-shi**
**Osaka 554-0024 (JP)**
• **NAKAI, Ryusuke**
**Osaka-shi**
**Osaka 554-0024 (JP)**

(74) Representative: **Setna, Rohan P.**
**Boult Wade Tennant**
**Verulam Gardens**
**70 Gray's Inn Road**
**London WC1X 8BT (GB)**

(54) **METHOD FOR CLEANING FILTER MEMBRANE, AND MEMBRANE FILTER**

(57)     There is provided a cleaning method for a hydrophobic filtration membrane used for membrane filtration of water to be treated such as seawater, discharged water and ballast water including a jelly-like suspended substance and clogged with the suspended substance in the water to be treated, the filtration membrane being brought into contact with limonene-containing water, or backwashing of the filtration membrane with a cleaning liquid being done, and then, a flow having air taken therein being applied onto a surface of the filtration membrane or a water stream from an eductor nozzle being sprayed onto the filtration membrane. There is also provided a membrane filtration apparatus capable of efficiently performing the above-mentioned cleaning method.

FIG.1

EP 2 623 186 A1

**Description**

TECHNICAL FIELD

The present invention relates to a cleaning method for a filtration membrane in membrane filtration. Specifically, the present invention relates to a cleaning method for a filtration membrane to recover the treatment flow rate (or filtration pressure) because pores of the filtration membrane are clogged with a suspended substance in water to be treated during membrane filtration, which causes a decrease in the treatment flow rate (or an increase in the filtration pressure). The present invention also relates to a membrane filtration apparatus capable of efficiently performing the cleaning method.

BACKGROUND ART

Membrane filtration with a hydrophobic filtration membrane such as a hollow fiber membrane and a membrane is widely performed to remove suspended substances included in seawater, discharged water, ballast water and the like. In seawater, however, there is approximately 1 to several ppm of an adhesive substance called TEP (transparent exopolymer particles), which is secreted outside a cell by plankton and microbes. TEP include saccharide as the main ingredient and are deformable particles each having a particle size of approximately 1 to 200 $\mu$m. Organic particles such as TEP, that is, jelly-like suspended substances deform. Therefore, in membrane filtration of the water to be treated including the jelly-like suspended substances, the jelly-like suspended substances adhere to the membrane surface and the inside of pores and spread out, which easily causes fouling (clogging) of the pores.
When a filtration membrane made of a hydrophobic material such as fluorine resin or polyethylene and having a pore diameter of approximately 1 $\mu$m or more is used in membrane filtration of the water to be treated including such jelly-like suspended substances, occurrence of clogging tends to be less likely and a decrease over time in the treatment flow rate (or an increase over time in the filtration pressure) tends to be small. It seems that the jelly-like suspended substances do not easily adhere to a hydrophobic filtration membrane having a large pore diameter as compared with a hydrophilic filtration membrane, and thus, clogging is suppressed. Thus, the hydrophobic filtration membrane having a relatively large pore diameter is suitably used for membrane filtration of seawater, discharged water, ballast water and the like.
However, even when such a filtration membrane is used, clogging of the filtration membrane, a decrease in the treatment flow rate and an increase in the filtration pressure cannot be sufficiently prevented. Thus, it is necessary to timely clean the filtration membrane during membrane filtration to recover the treatment flow rate (or filtration pressure), and it is necessary to clean and remove the suspended substances with which the pores are clogged.
As a method for cleaning the filtration membrane, a method in which water is passed through the filtration membrane in the direction opposite to the liquid flow during filtration (hereinafter referred to as "backwash using a liquid passing through a membrane" or "backwash") is widely used. In addition, physical cleaning and the like are also used, such as a method for cleaning the membrane by injecting a chemical solution (chemical solution cleaning), a method for cleaning the filtration membrane with a hand, a cleaning method by passing gas through the filtration membrane in the direction opposite to the liquid flow during filtration (air backwash), a cleaning method by applying an ultrasonic wave to the membrane (ultrasonic cleaning). In order to further enhance the cleaning efficiency, a cleaning method obtained by combining the above methods is also known.
Japanese Patent Laying-Open No. 8-332357 (Patent Literature 1), for example, discloses "a method for regenerating a filter module, wherein in order to peel off a deposit adhering to a filtering surface and flow the deposit out by passing backwashing water through the filter module and oscillating water in the module while providing mechanical vibrations to the filter module using a hollow fiber membrane, switching between supply and discharge of the backwashing water is appropriately made to change the water level in the module along a hollow fiber bundle" (claim 1). Patent Literature 1 further describes "when peeling off the adhering deposit is difficult, solutions of hydrochloric acid, citric acid, oxalic acid, hypochlorous acid, and synthetic detergent may be used alone or may be mixed as the backwashing water in order to enhance the cleaning effect. In addition, the above method may be performed after immersion as pretreatment in these solutions used alone or mixed" (paragraph 0005).

CITATION LIST

PATENT LITERATURE

    PTL 1: Japanese Patent Laying-Open No. 8-332357

SUMMARY OF INVENTION

TECHNICAL PROBLEM

In cleaning of the filtration membrane as described above, however, the recovery rate of the filtration capability (large treatment flow rate, low filtration pressure) has not been sufficient. In particular, in membrane filtration of seawater, discharged water, ballast water and the like including the jelly-like suspended substances, the recovery rate of the filtration capability has not been sufficient, and thus, it has been necessary to increase the number of cleaning, which has caused a decrease in the membrane filtration efficiency. Furthermore, complete removal of clogging by cleaning has been impossible, and the filtration pressure immediately after cleaning has increased every time passage of a liquid and cleaning are repeated.

An object of the present invention is to provide a cleaning method for a hydrophobic filtration membrane, which allows efficient cleaning of the hydrophobic filtration membrane whose pores are clogged in membrane filtration of water to be treated such as seawater, discharged water and ballast water including jelly-like suspended substances, which is excellent in recovery of the filtration capability, and which does not cause an increase in the filtration pressure by repeated passage of a liquid and cleaning.

The inventors of the present invention have found that the quality of the filtered water may become deteriorated when this cleaning method for the hydrophobic filtration membrane is performed. Therefore, another object of the present invention is to provide a method for preventing the deterioration in the quality of the filtered water in this case.

Still another object of the present invention is to provide a membrane filtration apparatus capable of efficiently performing the above-mentioned cleaning method for the hydrophobic filtration membrane.

SOLUTION TO PROBLEM

As a result of earnest study of the above objects, the inventors of the present invention have found that clogging can be efficiently removed and excellent cleaning efficiency (recovery of the filtration capability) can be achieved by cleaning the clogged hydrophobic filtration membrane with water to which limonene (orange detergent) is added, not with water or conventionally-used chemical agents.

The inventors of the present invention have also found that excellent recovery of the filtration capability can also be achieved by a method for backwashing the clogged hydrophobic filtration membrane, and then, causing a water stream, particularly a water stream having air taken therein to flow onto the surface of the hydrophobic filtration membrane, or a method for blowing off the suspended substances on the hydrophobic filtration membrane by a powerful water stream from a nozzle of an eductor (ejector) for drawing in the surrounding water to produce the powerful water stream.

The inventors of the present invention have further found that deterioration in the quality of the filtered water, which may be caused in cleaning of the hydrophobic filtration membrane with the above-mentioned water to which limonene (orange detergent) is added, can be suppressed by cleaning the hydrophobic filtration membrane with limonene, and then, further cleaning the hydrophobic filtration membrane with acid or alcohol. In other words, the above-mentioned objects are achieved by the configuration as described below.

The invention claimed in claim 1 is directed to a cleaning method for a hydrophobic filtration membrane used for membrane filtration and clogged with a suspended substance in water to be treated, the filtration membrane being brought into contact with limonene-containing water.

The hydrophobic filtration membrane herein refers to a membrane that is made of a hydrophobic polymer material and is not subjected to hydrophilicizing processing (such as introduction of a hydrophilic group into a polymer), and refers to a membrane having a uniform pore diameter such that it can be used as a filtration membrane. The pore diameter of the filtration membrane is not particularly limited. However, if the filtration membrane has a pore diameter of approximately 1 $\mu$m or more, the efficiency in removing jelly-like suspended substances such as TEP is good, clogging is less likely and a decrease in the filtration capability is small (therefore, the frequency of cleaning can be reduced). Therefore, the filtration membrane having such a pore diameter is suitable for use in treatment of seawater, discharged water, ballast water and the like. In addition, when a former-stage processing is performed using an apparatus (module) including the hydrophobic filtration membrane having a pore diameter of approximately 1 $\mu$m or more, and a latter-stage processing is performed using an apparatus (module) including a filtration membrane having a smaller pore diameter in membrane filtration of the water to be treated such as seawater, discharged water and ballast water including the jelly-like suspended substances, clogging of the filtration membrane at the latter stage can be efficiently suppressed.

Although the manner of the hydrophobic filtration membrane is not particularly limited, a hollow fiber membrane, a membrane and the like can be used. In order to increase the membrane area to further increase the amount of treatment, the hollow fiber membrane can be preferably used.

The cleaning method according to the present invention is characterized in that the limonene-containing water is used as a cleaning liquid for the filtration membrane. (The cleaning liquid refers to a liquid used for cleaning. It is to be noted that the term "cleaning liquid" is used in the sense that the term includes water as well. In the case of a water-based liquid such as water and limonene-containing water, the cleaning liquid is also referred to as cleaning water.) The use of the limonene-containing water allows dramatic enhancement of the membrane cleaning effect (cleaning efficiency) as compared with conventional cleaning with water or cleaning with a cleaning liquid containing a surfactant or a chemical agent such as hypochlorous acid. This is probably because limonene has better wettability with a resin constituting the hydrophobic filtration membrane, particularly fluorine resin such as polytetrafluoroethylene (PTFE), than that of the jelly-like suspended substances such as TEP. Furthermore, although the conventional art has a problem of evolution of bubbles in a treated liquid caused by mixing of the surfactant into the treated liquid, and a problem of mixing a toxic chemical agent into the treated liquid, limonene does not have the aforementioned problems of the conventional art because limonene is not foamable and toxic.

The limonene-containing water refers to an aqueous solution of limonene. Limonene is an ingredient included in citrus fruits such as lemon, and is used as a naturally-derived detergent (e.g., orange detergent).

The limonene-containing water preferably has a limonene concentration of 10 ppm or more. If the limonene-containing water has a limonene concentration of less than 10 ppm, the cleaning efficiency may be insufficient.

The limonene-containing water may include other chemical agents and cleaning with the limonene-containing water may be combined with other chemical solution cleaning and the like within a range that does not depart from the present invention.

The water to be treated to which the cleaning method according to the present invention is applied is not particularly limited as long as the water can be used for membrane filtration. However, particularly when the water to be treated includes the jelly-like suspended substances such as TEP like seawater, discharged water and ballast water, the effects of the present invention can be exerted. Therefore, such water to be treated including the jelly-like suspended substances is suitable as the water to be treated.

The invention claimed in claim 2 is directed to the cleaning method for a filtration membrane according to claim 1, wherein the contact between the limonene-containing water and the filtration membrane is achieved by backwashing the filtration membrane.

A method for bringing the filtration membrane into contact with the limonene-containing water is not particularly limited. For example, the method can also include a method for immersing the clogged filtration membrane in the limonene-containing water, and a method for passing the limonene-containing water in the same direction as a flow of the water to be treated during filtration to clean the filtration membrane (forward direction cleaning). A method by backwash (backwash using a liquid passing through the membrane) for passing the limonene-containing water in a direction opposite to the flow of the water to be treated during filtration is, however, preferable because easiness of the cleaning operation and high cleaning efficiency can be obtained.

The invention claimed in claim 3 is directed to the cleaning method for a filtration membrane according to claim 1 or 2, wherein the filtration membrane is made of fluorine resin or polyethylene.

A material constituting the hydrophobic filtration membrane can include fluorine resin or polyolefin. Fluorine resin can include PTFE, polyvinylidene fluoride (PVdF) and the like, and polyolefin can include polyethylene and other poly-$\alpha$-olefin. Among these, a membrane made of fluorine resin or polyethylene is suitably used as the hydrophobic filtration membrane in the present invention because the membrane is excellent in chemical resistance and mechanical strength.

The invention claimed in claim 4 is directed to the cleaning method for a filtration membrane according to any one of claims 1 to 3, wherein physical cleaning is done when the filtration membrane is brought into contact with the limonene-containing water.

A combination of physical cleaning and cleaning by contact between the limonene-containing water and the filtration membrane allows further enhancement of the cleaning efficiency of the filtration membrane, and thus, the combination is preferable. Physical cleaning herein can include a method for cleaning the filtration membrane with a hand, a cleaning method by passing gas through the filtration membrane (air bubbling), a cleaning method by applying an ultrasonic wave to the membrane (ultrasonic cleaning), a method for spraying water or a cleaning liquid onto the membrane, a method for causing a water stream, particularly a water stream having air taken therein to flow onto the surface of the membrane, a method for blowing off the suspended substances on the surface of the membrane by a powerful water stream from a nozzle of an eductor, and the like.

"When the filtration membrane is brought into contact with the limonene-containing water" includes both "simultaneously with contact" and "after contact." An example of "simultaneously with contact" can include, for example, a method for backwashing the filtration membrane using the limonene-containing water passing through the filtration membrane, while applying an ultrasonic wave to the filtration membrane. An example of "after contact" can include a method for backwashing the filtration membrane using the limonene-containing water passing through the filtration membrane, and then, crumpling the filtration membrane, and a method for spraying water or a cleaning liquid onto the filtration membrane using a shower device and the like.

The invention claimed in claim 5 is directed to the cleaning method for a filtration membrane according to claim 4, wherein the contact between the limonene-containing water and the filtration membrane is achieved by backwashing the filtration membrane, and the physical cleaning is done using a method for spraying a cleaning liquid onto a surface of the filtration membrane after the backwashing. This method is preferable among the methods combined with physical cleaning, because the cleaning efficiency of the filtration membrane is further enhanced. It is to be noted that water is also used as the cleaning liquid as described above.

The method for spraying the cleaning liquid onto the surface of the filtration membrane can include a method for spraying the shower-like cleaning liquid onto a relatively large area of the surface of the filtration membrane, a method for spraying a thin jet flow of the cleaning liquid onto a small area of the surface of the filtration membrane and shifting the sprayed area to spray the cleaning liquid onto the entire surface of the filtration membrane, and the like. The method for spraying the shower-like cleaning liquid can include a method for spraying the shower-like cleaning liquid onto the entire surface of the filtration membrane by moving one or a plurality of nozzles for spraying the shower-like cleaning liquid onto a part of the surface of the filtration membrane, a method for simultaneously spraying the shower-like cleaning liquid onto the entire surface of the filtration membrane using multiple nozzles, or the like. The method for spraying the shower-like cleaning liquid is preferable because the cleaning efficiency of the filtration membrane is particularly enhanced.

The liquid sprayed onto the surface of the filtration membrane can include a cleaning liquid such as the limonene-containing water, in addition to water. Aqueous solutions of the other chemical agents used in usual chemical solution cleaning can also be used within a range that does not depart from the present invention. The use of the limonene-containing water in this physical cleaning is preferable because the cleaning efficiency can be further enhanced.

The invention claimed in claim 6 is directed to a cleaning method for a hydrophobic filtration membrane used for membrane filtration and clogged with a suspended substance in water to be treated, backwashing of the filtration membrane with a cleaning liquid being done, and then, a cleaning liquid having air taken therein being fed onto a surface of the filtration membrane. In other words, the invention claimed in claim 6 is directed to a method for cleaning the filtration membrane by air taken in, that is, so-called bubbling jet (jet flow), together with a water stream (a flow of the cleaning liquid) after backwashing. Feeding the water stream having air taken therein onto the surface of the filtration membrane refers to causing the cleaning liquid to flow in the direction of the surface of the filtration membrane to generate shearing force between the water stream and the filtration membrane. This method allows dramatic enhancement of the cleaning effect of the filtration membrane.

The invention claimed in claim 7 is directed to a cleaning method for a hydrophobic filtration membrane used for membrane filtration and clogged with a suspended substance in water to be treated, backwashing of the filtration membrane with a cleaning liquid being done, and then, a water stream from an eductor nozzle being sprayed onto the filtration membrane.

The eductor is a device for drawing in the surrounding water to produce a powerful water stream. Spraying the powerful water stream from the nozzle of the eductor onto the surface of the filtration membrane allows dramatic enhancement of the cleaning effect. The eductor can preferably include a device including an inlet in a throat portion between a nozzle and a pipe for supplying a fluid (water) to the nozzle, for drawing in the fluid (water) from the inlet as well depending on a flow of the fluid (water) passing through the throat portion, and discharging a larger amount of the fluid (water) than an amount of fluid (water) supplied from the pipe to produce a powerful water stream. When cleaning is done by the eductor, a plurality of eductor nozzles are preferably provided in the filtration apparatus such that the powerful water stream discharged from the eductor nozzles is sufficiently sprayed onto the entire surface of the filtration membrane.

The invention claimed in claim 8 is directed to the cleaning method for a filtration membrane according to claim 6 or 7, wherein the cleaning liquid is limonene-containing water. In other words, the invention claimed in claim 8 is directed to a method in which the limonene-containing water is used as a cleaning liquid used for backwashing, a cleaning liquid used for bubbling jet (jet flow), or a cleaning liquid used in the eductor. This method allows further enhancement of the cleaning effect of the filtration membrane. A liquid similar to the above-mentioned limonene-containing water can be used as the limonene-containing water. It is to be noted that the limonene-containing water may be used only as the cleaning liquid used for backwashing, or only as the cleaning liquid used for bubbling jet (jet flow) or the cleaning liquid used in the eductor. It is to be noted that when the limonene-containing water is used as the cleaning liquid used for backwashing, this invention claimed in claim 8 corresponds to the invention claimed in claim 4, that is, the case where the contact between the limonene-containing water and the filtration membrane is achieved by backwashing the filtration membrane and physical cleaning is done by passing the cleaning liquid having air taken therein onto the surface of the filtration membrane or by spraying the water stream from the eductor nozzle onto the filtration membrane.

In the cleaning method for the filtration membrane according to claims 1 to 5 and 8 in which the limonene-containing water is used as the cleaning liquid, excellent effects such as high efficiency in removing the jelly-like suspended substances such as TEP are obtained as described above. On the other hand, the inventors of the present invention have found that when the limonene-containing water is used as the cleaning liquid (when the limonene-containing water is used particularly as backwashing water), the quality of the filtered water may become worse. Specifically, the inventors of the present invention have found that an SDI (Silt Density Index) of the filtered water may become larger. This is probably because limonene has better wettability with the resin constituting the hydrophobic filtration membrane, particularly fluorine resin such as polytetrafluoroethylene (PTFE), than that of the jelly-like suspended substances such as TEP, and thus, the surface of the hydrophobic filtration membrane is covered with limonene and a part of the hydrophobic property of the hydrophobic filtration membrane is lost. As a result of study, the inventors of the present invention have found that by cleaning (backwashing and the like) the hydrophobic filtration membrane with the limonene-containing water, and then, washing (rinsing) the hydrophobic filtration membrane with acid or alcohol to remove limonene from the hydrophobic filtration membrane, the problem of the increase in the SDI of the filtered water is solved and the quality of the filtered water is enhanced.

The invention claimed in claim 9 is directed to the cleaning method for a filtration membrane according to any one of claims 1 to 5, wherein the filtration membrane is brought into contact with the limonene-containing water, and then, the filtration membrane is cleaned with acid.

The invention claimed in claim 10 is directed to the cleaning method for a filtration membrane according to claim 9, wherein the acid is selected from monocarboxylic acid, dicarboxylic acid or tricarboxylic acid having a carbon number of 6 or less.

The invention claimed in claim 11 is directed to the cleaning method for a filtration membrane according to any one of claims 1 to 5, wherein the filtration membrane is brought into contact with the limonene-containing water, and then, the filtration membrane is cleaned with alcohol.

The invention claimed in claim 12 is directed to the cleaning method for a filtration membrane according to claim 11, wherein the alcohol is selected from monovalent alcohol having a carbon number of 4 or less.

The cleaning method for a filtration membrane according to any one of claims 1 to 5 allows dramatic enhancement of the cleaning effect of the filtration membrane, while the SDI may become larger. However, by bringing the filtration membrane into contact with the limonene-containing water, and then, washing (rinsing) the filtration membrane with acid or alcohol, the SDI of the treated water can be decreased and the water quality can be enhanced. Therefore, the above-mentioned method is preferable. Claim 9 or 11 corresponds to this preferable mode.

The acid or alcohol used in rinsing is water-soluble acid or alcohol. The monocarboxylic acid, dicarboxylic acid or tricarboxylic acid having a carbon number of 6 or less is preferable as the acid because it produces the effect of greatly decreasing the SDI. The monocarboxylic acid, dicarboxylic acid or tricarboxylic acid having a carbon number of 6 or less can include, for example, acetic acid and citric acid.

The monovalent alcohol having a carbon number of 4 or less is preferable as the alcohol because it produces the effect of greatly decreasing the SDI. The monovalent alcohol having a carbon number of 4 or less can include, for example, ethanol and isopropyl alcohol.

Membrane filtration of seawater, discharged water, ballast water and the like can be performed by a membrane filtration apparatus using a module including the hydrophobic filtration membrane. Since this filtration apparatus includes means for supplying the limonene-containing water, the above-mentioned cleaning method according to the present invention can be performed. Thus, in claim 13, the present invention provides a membrane filtration apparatus using a module including a hydrophobic filtration membrane, the membrane filtration apparatus including means for supplying limonene-containing water.

The means for supplying the limonene-containing water refers to means for supplying the limonene-containing water such that the hydrophobic filtration membrane in the membrane filtration apparatus is brought into contact with the limonene-containing water. This means can include, for example, a combination of backwash means for backwashing the hydrophobic filtration membrane and means for supplying the limonene-containing water as the cleaning liquid used in this backwash means.

The invention claimed in claim 14 is directed to the membrane filtration apparatus according to claim 13, further including: means for backwashing with the limonene-containing water; and a shower device spraying a shower-like cleaning liquid onto a surface of the hydrophobic filtration membrane. As described above, the method for backwashing the hydrophobic filtration membrane with the limonene-containing water, and then, spraying the shower-like cleaning liquid onto the hydrophobic filtration membrane allows obtainment of the dramatically excellent cleaning efficiency of the filtration membrane. The invention claimed in claim 14 is directed to the apparatus for performing this method.

The sprayed shower-like liquid herein can include the water, the limonene-containing water or the like as described above. A combined use of spraying the water and spraying the limonene-containing water allows further enhancement of the cleaning efficiency. Thus, the membrane filtration apparatus according to the present invention may include both a shower device for the water and a shower device for the limonene-containing water. In addition, the membrane filtration apparatus according to the present invention may further include means for applying an ultrasonic wave, and the like in order to further enhance the cleaning efficiency by a combined use with physical cleaning such as ultrasonic cleaning.

The invention claimed in claim 15 is directed to a membrane filtration apparatus using a module including a hydrophobic filtration membrane, the membrane filtration apparatus including: means for backwashing with a cleaning liquid; and means for applying a flow of a cleaning liquid having air taken therein onto a surface of the hydrophobic filtration membrane in a direction of the surface. The invention claimed in claim 15 is directed to a membrane filtration apparatus including means for performing the cleaning method for the filtration membrane as recited in claim 6. The use of this apparatus allows obtainment of the dramatically excellent cleaning efficiency. So-called bubbling jet can be used as the means for applying a flow of the cleaning liquid having air taken therein.

The invention claimed in claim 16 is directed to a membrane filtration apparatus using a module including a hydrophobic filtration membrane, the membrane filtration apparatus including: means for backwashing with a cleaning liquid; and an eductor. The invention claimed in claim 16 is directed to a membrane filtration apparatus including means for performing the cleaning method for the filtration membrane as recited in claim 7. The use of this apparatus allows obtainment of the dramatically excellent cleaning efficiency. A plurality of eductor nozzles are preferably provided in the filtration apparatus to sufficiently spray a powerful water stream onto the entire surface of the filtration membrane.

The membrane filtration apparatus according to claim 15 and the membrane filtration apparatus according to claim 16 preferably include the means for supplying the limonene-containing water. By combining this means for supplying the limonene-containing water with the above-mentioned backwash means, the means for applying a flow of the cleaning liquid having air taken therein, the eductor and the like, cleaning of the filtration membrane with the limonene-containing water, e.g., the cleaning method for the filtration membrane according to claim 8 can be performed.

The invention claimed in claim 17 is directed to the membrane filtration apparatus according to claim 13, further including means for cleaning the filtration membrane with acid or alcohol. By using this membrane filtration apparatus, the cleaning method for the filtration membrane according to claims 9 to 12 can be performed.

ADVANTAGEOUS EFFECTS OF INVENTION

In accordance with the cleaning method according to the present invention, the dramatically enhanced membrane cleaning effect (cleaning efficiency) is obtained as compared with conventional cleaning with water or cleaning with the cleaning liquid containing the surfactant or the chemical agent such as hypochlorous acid. This cleaning method can be easily performed using the membrane filtration apparatus according to the present invention. In addition, the problem of deterioration in the quality of the treated water in the cleaning method according to the present invention, which may be caused when the limonene-containing water is used, is improved by the method according to the present invention in which the filtration membrane is cleaned with acid or alcohol.

BRIEF DESCRIPTION OF DRAWINGS

Fig. 1 is a graph showing a change in differential pressure with time in membrane filtration in Example 1.
Fig. 2 is a graph showing a change in differential pressure with time in membrane filtration in Example 2.
Fig. 3 is a graph showing a change in differential pressure with time in membrane filtration in Example 3.
Fig. 4 is a graph showing a change in differential pressure with time in membrane filtration in Example 4.
Fig. 5 is a graph showing a change in differential pressure with time in membrane filtration in Example 5.
Fig. 6 is a schematic cross-sectional view showing an example of a membrane filtration apparatus according to the present invention.
Fig. 7 is a schematic view showing an internal structure of the example of the membrane filtration apparatus according to the present invention.
Fig. 8 is a graph showing a change in differential pressure with time in membrane filtration in Example 6.
Fig. 9 is a schematic view showing an internal structure of another example of the membrane filtration apparatus according to the present invention.
Fig. 10 is a graph showing a change in differential pressure with time in membrane filtration in Example 7.
Fig. 11 is a schematic view showing an internal structure of still another example of the membrane filtration apparatus according to the present invention.

DESCRIPTION OF EMBODIMENTS

Next, modes for carrying out the present invention will be specifically described. It is to be noted that the present invention is not limited to these modes, and modification into other modes can be made unless it departs from the present invention.

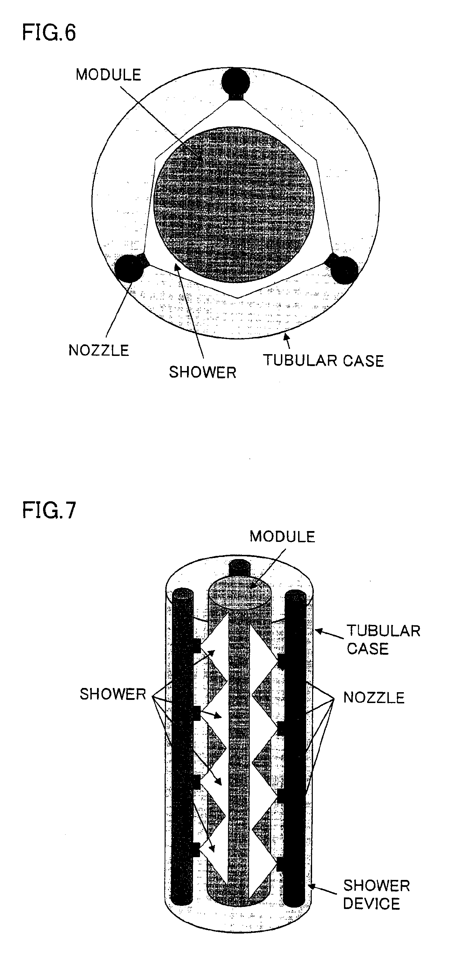

Fig. 6 is a cross-sectional view schematically showing an example of a membrane filtration apparatus according to the present invention. Fig. 7 schematically shows an internal structure of the example of the membrane filtration apparatus according to the present invention. As is clear from the figures, this membrane filtration apparatus includes a module in a central portion of a tubular case, and further includes three shower devices. Although not shown, the membrane filtration apparatus further includes means for supplying water to be treated and means for supplying a cleaning liquid formed of limonene-containing water from a direction opposite to a flow of the water to be treated. Although not shown, the membrane filtration apparatus further includes means for applying an ultrasonic wave to a membrane and means for air bubbling.

The module is a hollow fiber bundle formed of a plurality of hollow fiber membranes, although each hollow fiber is not shown in the figures. Each shower device has a plurality of (four in the figure) nozzles and the shower-like cleaning liquid is sprayed from this nozzle onto the module, that is, onto the surface of the hollow fiber bundle. A position, a shape and the like of the nozzle are preferably set such that the cleaning liquid is uniformly sprayed onto the entire surface of the hollow fiber bundle.

In membrane filtration of seawater and the like, the water to be treated such as seawater is supplied between the tubular case and the module, passes through the hollow fiber membranes, and is discharged as the treated liquid from inside the module (inside the hollow fiber) to the outside of the apparatus. During passage through the hollow fiber membranes, suspended substances are removed. At this time, the hollow fiber membranes are clogged with the suspended substances, which causes a decrease in the treatment flow rate and an increase in the filtration pressure (differential pressure).

Thus, in order to recover the treatment flow rate (or filtration pressure), the hollow fiber membranes are cleaned by backwashing with the limonene-containing water. At this time, the limonene-containing water is supplied into the module, passes through the hollow fiber membranes, and is discharged from between the tubular case and the module to the outside of the apparatus, thereby cleaning the hollow fiber membranes. Thereafter, supply of the limonene-containing water into the module is stopped and the liquid is removed from between the tubular case and the module. Then, the shower-like cleaning liquid is sprayed from the nozzle of each shower device onto the surface of the hollow fiber bundle. Water or the limonene-containing water is used as the cleaning liquid, and a combination of the water and the limonene-containing water may be used. As a result, recovery of the treatment flow rate and reduction in the differential pressure are achieved. Thereafter, passage of the water to be treated is resumed similarly to the above.

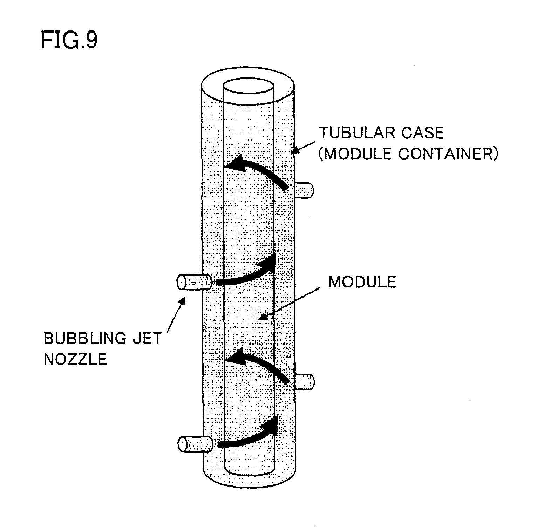

Fig. 9 schematically shows an internal structure of another example of the membrane filtration apparatus according to the present invention. As is clear from the figure, this membrane filtration apparatus includes a module in a central portion of a tubular case, and further includes a plurality of (four in the example in Fig. 9) nozzles for applying a bubbling jet. Although not shown, the membrane filtration apparatus further includes means for supplying water to be treated and means for supplying a cleaning liquid formed of limonene-containing water for backwashing from a direction opposite to a flow of the water to be treated.

Similarly to the example in Fig. 6, the module is a hollow fiber bundle formed of a plurality of hollow fiber membranes, although each hollow fiber is not shown in the figure. The bubbling jet (a water stream having air taken therein) is fed from each nozzle onto the surface of the hollow fiber bundle in the module to produce shear between the water stream and the surface of the hollow fiber. A position, a shape and the like of the nozzle are preferably set such that the water stream is uniformly applied onto the entire surface of the hollow fiber bundle.

A flow and the like of the water to be treated such as seawater in membrane filtration is similar to that in the above-mentioned example in Fig. 6. When the filtration pressure (differential pressure) increases due to clogging of the hollow fiber membranes with the suspended substances, the hollow fiber membranes are cleaned by backwashing with the limonene-containing water in order to recover the treatment flow rate (or filtration pressure). At this time, the limonene-containing water is supplied into the module, passes through the hollow fiber membranes, and is discharged from between the tubular case and the module to the outside of the apparatus, thereby cleaning the hollow fiber membranes. Thereafter, supply of the limonene-containing water into the module is stopped and the bubbling jet is applied from the nozzle onto the surface of the hollow fiber bundle in the module such that shear is produced between the water stream and the surface of the hollow fiber. The limonene-containing water may be used as water of the water stream. As a result, recovery of the treatment flow rate and reduction in the differential pressure are achieved. Thereafter, passage of the water to be treated is resumed similarly to the above.

Although the water stream that does not include air may be passed instead of the bubbling jet, passage of the water stream having air taken therein, that is, the bubbling jet allows considerable enhancement of the cleaning efficiency. The water pressure of the fed water stream is preferably 0.2 MPa or more. In addition, the flux of the water stream at an outlet of the nozzle is preferably 20 m/d or more. The bubbling jet having a larger amount of air taken therein than an amount of water is preferable. For example, a bubbling jet including air twice to five times as large as the amount of water and having a bubble size of approximately 1 to 4 mm is preferably used.

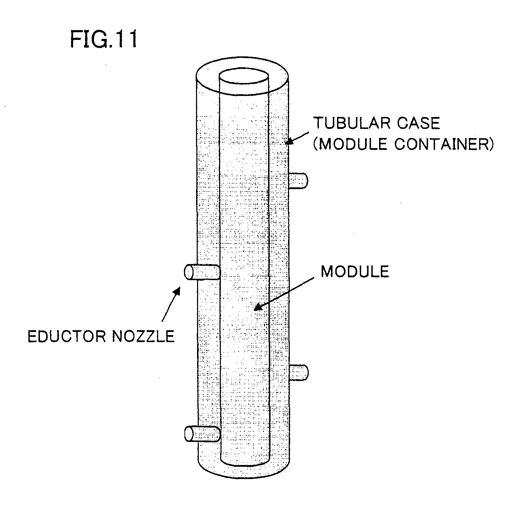

Fig. 11 schematically shows an internal structure of still another example of the membrane filtration apparatus according to the present invention. As is clear from the figure, this membrane filtration apparatus includes a module in a central portion of a tubular case, and further includes a plurality of (four in the example in Fig. 11) eductors. Although not shown, the membrane filtration apparatus further includes means for supplying water to be treated and means for supplying water (a liquid used for backwashing) for backwashing from a direction opposite to a flow of the water to be treated.

Similarly to the example in Fig. 6, the module is a hollow fiber bundle formed of a plurality of hollow fiber membranes, although each hollow fiber is not shown in the figure. Each eductor is attached to the tubular case, and an eductor nozzle is provided to be open toward the inside of the tubular case and to spray a powerful water stream discharged from the nozzle onto the surfaces of the hollow fiber membranes. Although a water stream of filtered water (water after filtration) is used as the powerful water stream discharged from the nozzle in this example, other fluids (water) such as the limonene-containing water can also be used. A position, a shape and the like of the nozzle of the eductor are preferably set such that the above-mentioned powerful water stream is sufficiently sprayed onto the entire module.

A flow and the like of the water to be treated such as seawater in membrane filtration is similar to that in the above-mentioned example in Fig. 6. When the filtration pressure (differential pressure) increases due to clogging of the hollow fiber membranes with the suspended substances, the treatment flow rate (or filtration pressure) can be recovered in accordance with procedures (1), (2) and (3) described below.

(1) Backwashing with limonene-containing water

The hollow fiber membranes are cleaned by backwashing with the limonene-containing water. At this time, the limonene-containing water is supplied into the module, passes through the hollow fiber membranes, and is discharged from between the tubular case and the module to the outside of the apparatus, thereby cleaning the hollow fiber membranes.

(2) Backwashing with water that does not contain limonene

After procedure (1), the limonene-containing water in the tubular case is discharged. Thereafter, the tubular case is filled again with water that does not contain limonene (e.g., the water to be treated = seawater) for backwashing with the filtered water. As a result of this backwashing, limonene remaining in the hollow fiber membranes is washed away.

(3) Cleaning by eductor

After procedure (2), the water in the tubular case is discharged. Thereafter, the powerful water stream is sprayed from the eductor nozzle onto the hollow fiber membranes to blow off the suspended substances on the hollow fiber membranes.

As a result of the above procedures (1), (2) and (3), recovery of the treatment flow rate and reduction in the differential pressure are achieved. Thereafter, passage of the water to be treated is resumed similarly to the above. It is to be noted that (3) cleaning by eductor may be done after procedure (1), and then, (2) backwashing with water that does not contain limonene may be done.

[Example]

Example 1

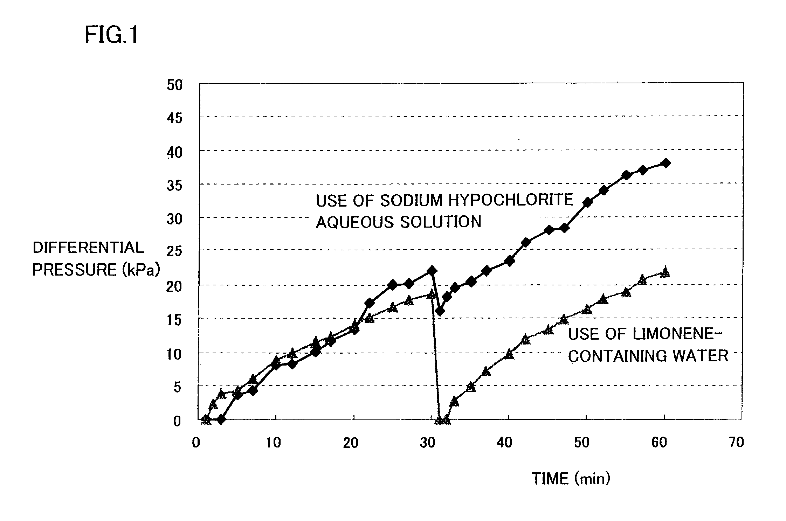

Using a membrane filtration apparatus having the following specifications and having the structure that can be shown in Figs. 6 and 7, filtration was performed by passing agar water having 1 ppm of agar dissolved therein at a constant flux of 10 m/day. A change in the filtration pressure (differential pressure) at this time is shown in Fig. 1. Since the filtration pressure (differential pressure) increased as a result of operation, backwashing was done using limonene-containing water containing 1000 ppm of limonene after thirty-minute operation. As a result, the differential pressure recovered to almost zero as shown in Fig. 1.

After similar thirty-minute operation, backwashing was done using a cleaning liquid containing 20 ppm of sodium hypochlorite. As a result, a decrease in the differential pressure was small as shown in Fig. 1. This result shows that the use of the limonene-containing water allows achievement of the dramatically excellent cleaning efficiency as compared with the method using a sodium hypochlorite aqueous solution (conventional method).

[Specifications]

diameter of the module: 40 mm
hollow fiber membranes in the module: 10 membranes

length of the module: 40 cm
hollow fiber membrane:

- POREFLON (PTFE) manufactured by Sumitomo Electric Fine Polymer, Inc.
- diameter: 2.3 mm
- pore diameter: 2 $\mu$m

Example 2

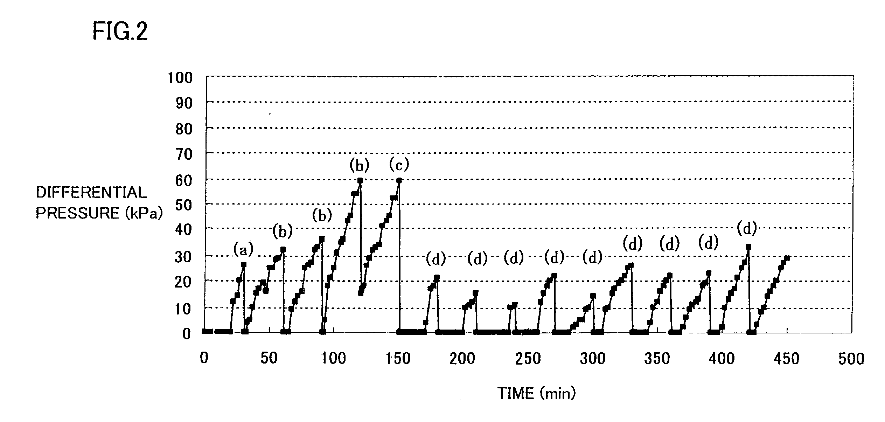

Using a membrane filtration apparatus having the same specifications as those of the membrane filtration apparatus used in Example 1 except that a filtration membrane (diameter: 2.3 mm) made of POREFLON (PTFE) manufactured by Sumitomo Electric Fine Polymer, Inc. and having a pore diameter of 1.5 $\mu$m, filtration was performed by passing seawater (seawater obtained at Shimizu port in Shizuoka prefecture) having a turbidity of 1.18 NTU at a constant flux of 10 m/day. A change in the filtration pressure (differential pressure) at this time is shown in Fig. 2.

30 minutes after operation started, backwashing was done using the limonene-containing water containing 1000 ppm of limonene, and an ultrasonic wave having a frequency of 40 kHz and an output of 300 W was applied for 30 seconds, and then, air bubbling was performed for one minute ((a) in Fig. 2). Thereafter, for every thirty-minute operation, backwashing with water as well as cleaning by thirty-second application of an ultrasonic wave having a frequency of 40 kHz and an output of 300 W followed by one-minute air bubbling were done three times ((b) in Fig. 2).

Thereafter, after further thirty-minute operation (150 minutes after operation started), backwashing was done using the limonene-containing water containing 1000 ppm of limonene, and an ultrasonic wave having a frequency of 40 kHz and an output of 300 W was applied for 30 seconds, and then, cleaning by spraying shower-like water onto the module at a flow rate of 6 L/minute with a shower device was done for one minute ((c) in Fig. 2). Thereafter, for every thirty-minute operation, backwashing with water as well as cleaning by thirty-second application of an ultrasonic wave having a frequency of 40 kHz and an output of 300 W followed by one-minute air bubbling were done ((d) in Fig. 2).

As shown in Fig. 2, in backwashing with water + ultrasonic wave application + cleaning by bubbling, there is a tendency that the differential pressure increases every time cleaning is repeated. On the other hand, in backwashing with limonene-containing water + ultrasonic wave application + cleaning by shower, such a cleaning effect that the differential pressure recovers to almost zero can be achieved. In addition, even if backwashing with water + ultrasonic wave application + cleaning by bubbling is subsequently repeated, the tendency of increase in the differential pressure is reduced and more excellent cleaning efficiency can be achieved.

Example 3

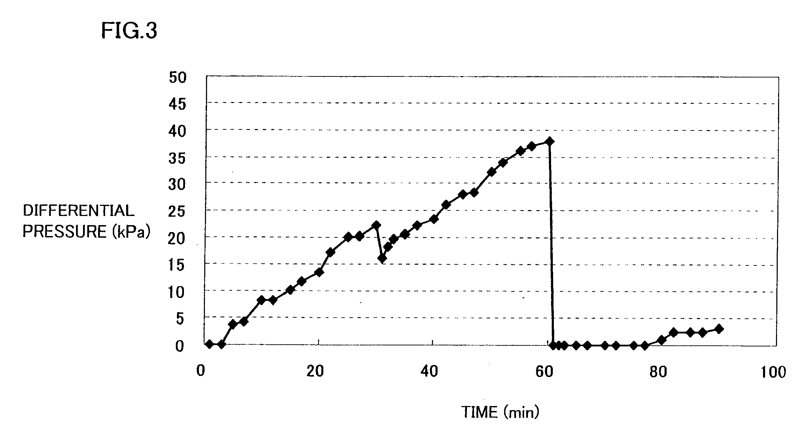

Using a membrane filtration apparatus (pore diameter of membrane: 2.0 $\mu$m) having the same specifications as those of the membrane filtration apparatus used in Example 1, filtration was performed by passing agar-added water (1 ppm of agar) having a turbidity of 0.24 NTU at a constant flux of 10 m/day. A change in the filtration pressure (differential pressure) at this time is shown in Fig. 3.

30 minutes after operation started, backwashing was done for 30 seconds using the cleaning liquid containing 20 ppm of sodium hypochlorite. After further thirty-minute operation (60 minutes after operation started), backwashing was done for 30 seconds using the limonene-containing water containing 1000 ppm of limonene. As shown in Fig. 1, a decrease in the differential pressure was small in cleaning with the sodium hypochlorite aqueous solution, whereas such a cleaning effect that the differential pressure recovers to almost zero could be achieved and a subsequent increase in the differential pressure was suppressed in cleaning with the limonene-containing water. This result shows that the use of the limonene-containing water allows achievement of the dramatically excellent cleaning efficiency as compared with the method in which the sodium hypochlorite aqueous solution is used (conventional method).

Example 4

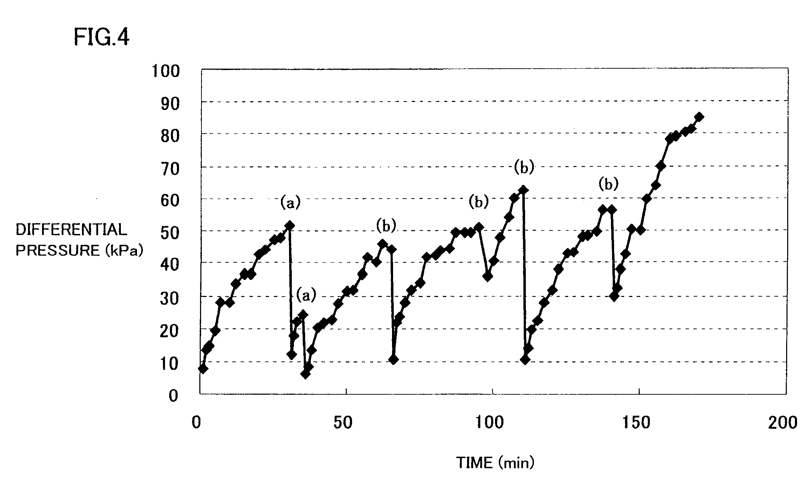

Using the membrane filtration apparatus (pore diameter of membrane: 2.0 $\mu$m) having the same specifications as those of the membrane filtration apparatus used in Example 1, filtration was performed by passing seawater (seawater obtained at Shimizu port in Shizuoka prefecture) having a turbidity of 1.40 NTU at a constant flux of 10 m/day. A change in the filtration pressure (differential pressure) at this time is shown in Fig. 4.

30 minutes and 35 minutes after operation started, backwashing was done using the limonene-containing water containing 1000 ppm of limonene, and an ultrasonic wave having a frequency of 40 kHz and an output of 300 W was applied for 30 seconds, and then, air bubbling was performed for one minute ((a) in Fig. 4). Thereafter, after thirty-minute operation (65 minutes after operation started), backwashing was done using limonene-containing water containing 30 ppm of limonene, and an ultrasonic wave having a frequency of 40 kHz and an output of 300 W was applied for 30 seconds, and then, air bubbling was performed for one minute ((b) in Fig. 4). The same cleaning was done 95 minutes, 110 minutes and 140 minutes after operation started ((b) in Fig. 4).

As shown in Fig. 4, similar cleaning effect is obtained both in the case where the limonene-containing water has a limonene concentration of 30 ppm and in the case where the limonene-containing water has a limonene concentration of 1000 ppm.

Example 5

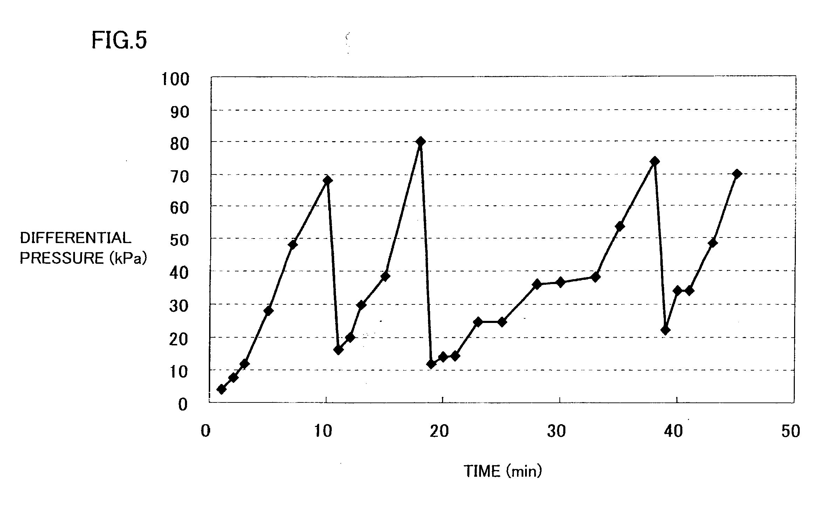

Using a membrane filtration apparatus having the same specifications as those of the membrane filtration apparatus used in Example 1 except that a filtration membrane (diameter: 2.3 mm) made of POREFLON (PTFE) manufactured by Sumitomo Electric Fine Polymer, Inc. and having a pore diameter of 0.45 $\mu$m, filtration was performed by passing seawater (seawater obtained at Shimizu port in Shizuoka prefecture) having a turbidity of 1.40 NTU at a constant flux of 10 m/day. A change in the filtration pressure (differential pressure) at this time is shown in Fig. 5.

10 minutes, 18 minutes and 38 minutes after operation started, backwashing was done using limonene-containing water containing 100 ppm of limonene, and an ultrasonic wave having a frequency of 40 kHz and an output of 300 W was applied for 30 seconds, and then, air bubbling was performed for one minute. The result in Fig. 5 shows that even when the hydrophobic filtration membrane having a small pore diameter of 0.45 $\mu$m is used, the use of the limonene-containing water allows achievement of excellent cleaning efficiency of the filtration membrane.

Example 6

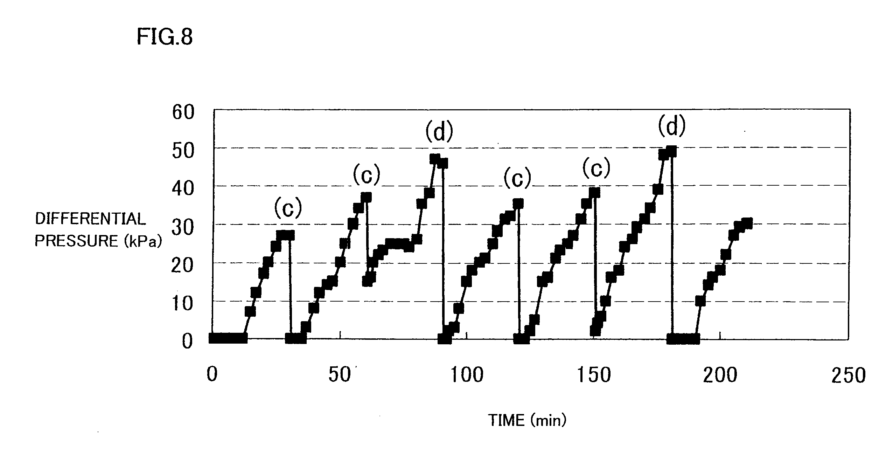

Using the membrane filtration apparatus (pore diameter of membrane: 2.0 $\mu$m) having the same specifications as those of the membrane filtration apparatus used in Example 1 and having the structure that can be shown in Fig. 9, filtration was performed by passing seawater (seawater obtained at Shimizu port in Shizuoka prefecture) having a turbidity of 1.40 NTU at a constant flux of 10 m/day. A change in the filtration pressure (differential pressure) at this time is shown in Fig. 8.

At (c) in Fig. 8, backwashing was done using the filtered water, and then, air bubbling (size of bubble: about 10 mm, speed of bubble: 0.2 m/second) was performed for one minute. In addition, at (d), backwashing was done using the filtered water, and then, the bubbling jet (size of bubble: 1 to 4 mm) was applied for one minute at an air amount of 32 L/minute and a water amount of 10 L/minute (speed of bubble: 0.2 m/second).

As shown in Fig. 8, in the case of air bubbling, as a result of repeated cleaning, sufficient cleaning becomes impossible (the differential pressure does not become zero) even if backwashing and ultrasonic wave application were performed. On the other hand, in the case of bubbling jet, sufficient cleaning is possible (the differential pressure becomes zero).

Example 7

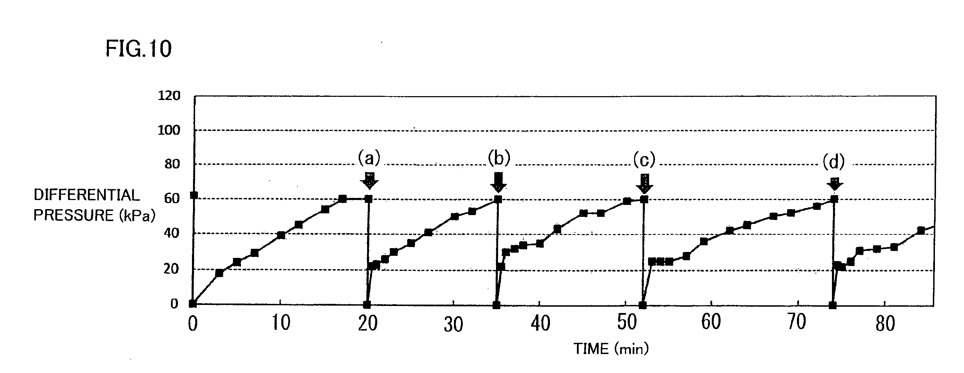

Using a membrane filtration apparatus (pore diameter of membrane: 1.5 $\mu$m) having the same specifications as those of the membrane filtration apparatus used in Example 1 and including an eductor, a shower device and a bubbling jet device, filtration was performed by passing seawater (seawater obtained at Imari in Saga prefecture on November 26, 2010) having a turbidity of 1.40 NTU at a constant flux of 5 m/day. A change in the filtration pressure (differential pressure) at this time is shown in Fig. 10.

At (a) in Fig. 10, backwashing was done for one minute using the filtered water. At (b), backwashing was done for one minute using the filtered water, and then, the bubbling jet (size of bubble: 1 to 4 mm) was applied for one minute at an air amount of 48 L/minute and a water amount of 12 L/minute (speed of bubble: 0.2 m/second). At (c), backwashing was done for one minute using the filtered water, and then, the filtered water was discharged for one minute at 12 L/minute, using an eductor (minieductor manufactured by Spraying Systems Co., Japan). At (d), backwashing was done for one minute using the filtered water, and then, cleaning by spraying shower-like water onto the module at a flow rate of 6 L/minute with the shower device was done for one minute.

As shown in Fig. 10, both in the case of backwashing only and in the case of combined use of backwashing and the bubbling jet, the eductor or the shower cleaning, the differential pressure after cleaning becomes zero and sufficient cleaning is achieved. Among these, in the case of cleaning by the eductor, the increase speed of the differential pressure after cleaning is low and particularly excellent cleaning efficiency is achieved.

Example 8

Using the membrane filtration apparatus (pore diameter of membrane: 1.5 $\mu$m) having the same specifications as those of the membrane filtration apparatus used in Example 1, backwashing was done for 30 seconds using the limonene-containing water containing 1000 ppm of limonene, and then, backwashing was done for 30 seconds using a rinsing liquid shown in Table 1. Thereafter, filtration was performed by passing seawater (seawater obtained at Imari in Saga prefecture on November 26, 2010) having a turbidity of 1.40 NTU at a constant flux of 5 m/day for 30 minutes, and the filtered liquid (the treated liquid after membrane filtration) was obtained. $SDI_{15}$ of the filtered liquid thus obtained was measured as described below. The result is shown in Table 1. It is to be noted that seawater was passed without rinsing in experiment No. 8-1.

[Method for measuring $SDI_{15}$]

The filtered liquid obtained as described above was filtered at a constant pressure by a filter having a pore diameter of 0.45 $\mu$m and the flow rate of the filtered liquid was measured. Assuming that the flow rate at the start of filtration is $F_0$ and the flow rate 15 minutes after filtration has started is $F_{15}$, $SDI_{15}$ is expressed by the following equation:

$$SDI_{15} = (100/15) \times \{1-(F_{15}/F_0)\}$$

[Table 1]

| experiment No. | rinsing liquid | n (number of measurement) | $SDI_{15}$ measured value |
|---|---|---|---|
| 8-1 | no rinsing (comparative example) | 3 | 4.2, 3.7, 4.1 |
| 8-2 | 4% by mass citric acid aqueous solution | 1 | 3.2 |
| 8-3 | 2% by mass citric acid aqueous solution | 2 | 3.1, 3.3 |
| 8-4 | 1% by mass citric acid aqueous solution | 2 | 3.0, 3.2 |
| 8-5 | 0.5% by mass citric acid aqueous solution | 1 | 3.0 |
| 8-6 | 4% by mass acetic acid aqueous solution | 2 | 3.1, 3.0 |
| 8-7 | isopropyl alcohol | 4 | 1.8,2.1,22,1.9 |
| 8-8 | 40% ethanol aqueous solution | 1 | 1.9 |
| 8-9 | 20% ethanol aqueous solution | 1 | 3.2 |
| 8-10 | 10% ethanol aqueous solution | 1 | 3.2 |

As the SDI value becomes smaller, the water quality becomes better, and $SDI_{15}$ of water passed through an RO membrane in seawater desalination using the reverse osmosis method is desirably 3.5 or less. However, as shown in Table 1, $SDI_{15}$ exceeds 3.5 in experiment No. 8-1 in which only backwashing with the limonene-containing water is done without rinsing.

On the other hand, as shown in Table 1, $SDI_{15}$ is improved to approximately 3 or less than 3 when backwashing with the limonene-containing water is done, and then, rinsing with the citric acid aqueous solution, the acetic acid aqueous solution, the isopropyl alcohol, or the ethanol aqueous solution is performed. Therefore, it is preferable to do backwashing with the limonene-containing water for cleaning clogging, and then, perform rinsing with the citric acid aqueous solution, the acetic acid aqueous solution, the isopropyl alcohol, the ethanol aqueous solution or the like for enhancing the water quality.

**Claims**

1. A cleaning method for a hydrophobic filtration membrane used for membrane filtration and clogged with a suspended substance in water to be treated,
the filtration membrane being brought into contact with limonene-containing water.

2. The cleaning method for a filtration membrane according to claim 1, wherein
the contact between the limonene-containing water and the filtration membrane is achieved by backwashing said filtration membrane.

3.  The cleaning method for a filtration membrane according to claim 1 or 2, wherein
    said filtration membrane is made of fluorine resin or polyethylene.

4.  The cleaning method for a filtration membrane according to any one of claims 1 to 3, wherein
    physical cleaning is done when the filtration membrane is brought into contact with the limonene-containing water.

5.  The cleaning method for a filtration membrane according to claim 4, wherein
    the contact between the limonene-containing water and the filtration membrane is achieved by backwashing said
    filtration membrane, and said physical cleaning is done using a method for spraying a cleaning liquid onto a surface
    of said filtration membrane after said backwashing.

6.  A cleaning method for a hydrophobic filtration membrane used for membrane filtration and clogged with a suspended
    substance in water to be treated,
    backwashing of said filtration membrane with a cleaning liquid being done, and then, a cleaning liquid having air
    taken therein being fed onto a surface of said filtration membrane.

7.  A cleaning method for a hydrophobic filtration membrane used for membrane filtration and clogged with a suspended
    substance in water to be treated,
    backwashing of said filtration membrane with a cleaning liquid being done, and then, a water stream from an eductor
    nozzle being sprayed onto said filtration membrane.

8.  The cleaning method for a filtration membrane according to claim 6 or 7, wherein
    said cleaning liquid is limonene-containing water.

9.  The cleaning method for a filtration membrane according to any one of claims 1 to 5, wherein
    after the filtration membrane is brought into contact with the limonene-containing water, said filtration membrane is
    cleaned with acid.

10. The cleaning method for a filtration membrane according to claim 9, wherein
    said acid is selected from monocarboxylic acid, dicarboxylic acid or tricarboxylic acid having a carbon number of 6
    or less.

11. The cleaning method for a filtration membrane according to any one of claims 1 to 5, wherein
    after the filtration membrane is brought into contact with the limonene-containing water, said filtration membrane is
    cleaned with alcohol.

12. The cleaning method for a filtration membrane according to claim 11, wherein
    said alcohol is selected from monovalent alcohol having a carbon number of 4 or less.

13. A membrane filtration apparatus using a module including a hydrophobic filtration membrane, the membrane filtration
    apparatus comprising
    means for supplying limonene-containing water.

14. The membrane filtration apparatus according to claim 13, further comprising:

    means for backwashing with the limonene-containing water; and
    a shower device spraying a shower-like cleaning liquid onto a surface of the hydrophobic filtration membrane.

15. A membrane filtration apparatus using a module including a hydrophobic filtration membrane, the membrane filtration
    apparatus comprising:

    m eans for backwashing with a cleaning liquid; and
    m eans for applying a flow of a cleaning liquid having air taken therein onto a surface of said hydrophobic
    filtration membrane in a direction of said surface.

16. A membrane filtration apparatus using a module including a hydrophobic filtration membrane, the membrane filtration apparatus comprising:

means for backwashing with a cleaning liquid; and
an eductor.

**17.** The membrane filtration apparatus according to claim 13, further comprising means for cleaning said filtration membrane with acid or alcohol.

EP 2 623 186 A1

## FIG.1

FIG.2

FIG.3

EP 2 623 186 A1

FIG.4

EP 2 623 186 A1

FIG.5

EP 2 623 186 A1

FIG.6

MODULE

NOZZLE

SHOWER

TUBULAR CASE

FIG.7

MODULE

TUBULAR
CASE

SHOWER

NOZZLE

SHOWER
DEVICE

FIG.8

EP 2 623 186 A1

FIG.9

TUBULAR CASE
(MODULE CONTAINER)

MODULE

BUBBLING JET
NOZZLE

## FIG.10

EP 2 623 186 A1

FIG.11

TUBULAR CASE
(MODULE CONTAINER)

MODULE

EDUCTOR NOZZLE

**INTERNATIONAL SEARCH REPORT**

| International application No. |
| --- |
| PCT/JP2011/071798 |

A. CLASSIFICATION OF SUBJECT MATTER
*B01D65/06*(2006.01)i, *B01D65/02*(2006.01)i, *B01D71/26*(2006.01)i, *B01D71/32*
(2006.01)i, *C02F1/44*(2006.01)i

According to International Patent Classification (IPC) or to both national classification and IPC

B. FIELDS SEARCHED

Minimum documentation searched (classification system followed by classification symbols)
B01D61/00-71/82, C02F1/44, B01D29/00-41/04

Documentation searched other than minimum documentation to the extent that such documents are included in the fields searched
Jitsuyo Shinan Koho        1922-1996   Jitsuyo Shinan Toroku Koho   1996-2011
Kokai Jitsuyo Shinan Koho   1971-2011   Toroku Jitsuyo Shinan Koho   1994-2011

Electronic data base consulted during the international search (name of data base and, where practicable, search terms used)
JSTPlus(JDreamII)

C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 53-131980 A  (Nitto Electric Industrial Co., Ltd.),<br>17 November 1978 (17.11.1978),<br>claim 1; page 1, lower right column, line 15 to page 2, upper right column, line 14<br>(Family: none) | 1-5,13,14<br>8-12,17 |
| X<br>Y | JP 2008-207158 A  (MRC Home Products Co., Ltd.),<br>11 September 2008 (11.09.2008),<br>claims 1, 3; paragraphs [0025] to [0027]<br>(Family: none) | 6,7,15,16<br>8-12 |
| Y | JP 2010-189635 A  (KakenTech Co., Ltd.),<br>02 September 2010 (02.09.2010),<br>claim 2; paragraphs [0060], [0061]<br>(Family: none) | 9-12,17 |

☒ Further documents are listed in the continuation of Box C.        ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>01 December, 2011 (01.12.11) | Date of mailing of the international search report<br>13 December, 2011 (13.12.11) |
| --- | --- |
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2011/071798

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2010-22935 A  (Kurita Water Industries Ltd.), 04 February 2010 (04.02.2010), claim 8 (Family: none) | 9,10,17 |

Form PCT/ISA/210 (continuation of second sheet) (July 2009)

## INTERNATIONAL SEARCH REPORT

| International application No. |
|---|
| PCT/JP2011/071798 |

**Box No. II     Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III     Observations where unity of invention is lacking (Continuation of item 3 of first sheet)**

This International Searching Authority found multiple inventions in this international application, as follows:
   See extra sheet.

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**        ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

| **INTERNATIONAL SEARCH REPORT** | International application No. |
|---|---|
| | PCT/JP2011/071798 |

<u>Continuation of Box No.III of continuation of first sheet(2)</u>

For the following reasons, this international application is considered to involve two inventions which do not comply with the requirement of unity of invention.
    Main invention: "claims 1-5, 8-14, and 17"
    Second invention: "claims 6, 7, 15, and 16"

"Cleaning of a hydrophobic filter membrane", which is a technical feature common among claims 1-17, is well known. This technical feature cannot hence be considered to be "a special technical feature" in the meaning of the second sentence of PCT Rule 13.2.

The "special technical feature" of the main invention is "bringing the hydrophobic filter membrane into contact with limonene-containing water".
    Meanwhile, the "(tentative) special technical feature" of the second invention is "backwashing the hydrophobic filter membrane and then causing an air-containing cleaning fluid to flow along the surface of the hydrophobic filter membrane".

The main invention and the second invention cannot be considered to have a technical relationship therebetween which involves one or more of the same or corresponding special technical features.

Form PCT/ISA/210 (extra sheet) (July 2009)

28

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8332357 A